(19) Europäisches Patentamt
European Patent Office
Office européen des brevets

(11) **EP 4 651 365 A1**

(12) **EUROPÄISCHE PATENTANMELDUNG**

(43) Veröffentlichungstag:
**19.11.2025  Patentblatt 2025/47**

(21) Anmeldenummer: **24176153.5**

(22) Anmeldetag: **16.05.2024**

(51) Internationale Patentklassifikation (IPC):
*H02P 27/08* (2006.01)     *B25F 5/00* (2006.01)

(52) Gemeinsame Patentklassifikation (CPC):
**H02P 27/08; B25F 5/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Hilti Aktiengesellschaft**
**9494 Schaan (LI)**

(72) Erfinder:
• **Koscheck, David**
**86899 Landsberg (DE)**
• **Schwarz, Stefan**
**86899 Landsberg (DE)**
• **Keller, Christian**
**86947 Petzenhausen (DE)**
• **Scherbaum, Markus**
**86853 Gennach (DE)**

(74) Vertreter: **Hilti Aktiengesellschaft**
**Corporate Intellectual Property**
**Feldkircherstrasse 100**
**Postfach 333**
**9494 Schaan (LI)**

(54) **EINSTELLEN EINER PWM-FREQUENZ BASIEREND AUF SYSTEMCHARAKTERISTIKEN**

(57)     Verfahren zum Steuern und Regeln eines Systems enthaltend eine Werkzeugmaschine und wenigstens eine mit der Werkzeugmaschine verbindbaren Energiespeichereinheit, wobei die Werkzeugmaschine einen Elektromotor, eine Steuervorrichtung, einen Motortreiber, eine Regeleinrichtung und einen ersten Transceiver enthält, und wobei die wenigstens eine Energiespeichereinheit einen zweiten Transceiver enthält.

Das Verfahren enthält die Verfahrensschritte:
- Verbinden der wenigstens einen Energiespeichereinheit mit der Werkzeugmaschine;
- Übermitteln wenigstens eines Kennwertes der wenigstens einen Energiespeichereinheit von der wenigsten einen Energiespeichereinheit an die Werkzeugmaschine;
- Ermitteln eines Resonanzfrequenzwertes basierend auf dem wenigstens einen übermittelten Kennwert der wenigstens einen Energiespeichereinheit sowie auf wenigstens einem Kennwert der Werkzeugmaschine; und
- Einstellen einer Schaltfrequenz für den Motortreiber zur Regelung des Elektromotors auf einen Wert, der größer oder kleiner als der ermittelte Resonanzfrequenzwert ist.

Fig. 2

EP 4 651 365 A1

**Beschreibung**

Die vorliegende Erfindung betrifft ein Verfahren zum Steuern und Regeln eines Systems enthaltend eine Werkzeugmaschine und wenigstens eine mit der Werkzeugmaschine verbindbaren Energiespeichereinheit, wobei die Werkzeugmaschine einen Elektromotor, eine Steuervorrichtung, einen Motortreiber, eine Regeleinrichtung und einen ersten Transceiver enthält, und wobei die wenigstens eine Energiespeichereinheit einen zweiten Transceiver enthält.

Des Weiteren bezieht sich die vorliegende Erfindung auf ein System enthaltend eine Werkzeugmaschine und wenigstens eine mit der Werkzeugmaschine verbindbare Energiequelle zur Durchführung eines Verfahrens.

Elektromotor erzeugen unter bestimmten Umständen Resonanzen, die zu Schwingungen führen, welche wiederum Beschädigung an dem Elektromotor oder an weiteren Bauteilen erzeugen können.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 4. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch ein Verfahren zum Steuern und Regeln eines Systems enthaltend eine Werkzeugmaschine und wenigstens eine mit der Werkzeugmaschine verbindbaren Energiespeichereinheit, wobei die Werkzeugmaschine einen Elektromotor, eine Steuervorrichtung, einen Motortreiber, eine Regeleinrichtung und einen ersten Transceiver enthält, und wobei die wenigstens eine Energiespeichereinheit einen zweiten Transceiver enthält.

Erfindungsgemäß enthält das Verfahren die Verfahrensschritte

- Verbinden der wenigstens einen Energiespeichereinheit mit der Werkzeugmaschine;

- Übermitteln wenigstens eines Kennwertes der wenigstens einen Energiespeichereinheit von der wenigsten einen Energiespeichereinheit an die Werkzeugmaschine;

- Ermitteln eines Resonanzfrequenzwertes basierend auf dem wenigstens einen übermittelten Kennwert der wenigstens einen Energiespeichereinheit sowie auf wenigstens einem Kennwert der Werkzeugmaschine; und

- Einstellen einer Schaltfrequenz für den Motortreiber zur Regelung des Elektromotors auf einen Wert, der größer oder kleiner als der ermittelte Resonanzfrequenzwert ist.

Die Schaltfrequenz kann dabei als Pulsweitenmodulationsfrequenz (PWM-Frequenz) ausgestaltet sein.

Gemäß einer weiteren vorteilhaften Ausführungsform kann es möglich sein, dass der wenigstens eine Kennwerte der wenigstens einen Energiespeichereinheit ein Induktionswert, Kapazitätswert und/oder Widerstandswert ist.

Der Induktionswert kann dabei auch als Motorinduktivität bzw. Induktivität des Elektromotors bezeichnet werden. Bei dem Widerstandswert kann es sich um einen Spulenwiderstand bzw. um den elektrischen Widerstand aller verwendeten Spulen handeln.

Entsprechend einer alternativen Ausführungsform kann es möglich sein, dass der Kennwert der Werkzeugmaschine ein Induktionswert, Kapazitätswert und/oder Widerstandswert ist.

Die Aufgabe wird des Weiteren gelöst durch ein System enthaltend eine Werkzeugmaschine und wenigstens eine mit der Werkzeugmaschine verbindbaren Energiespeichereinheit zur Durchführung des Verfahrens.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:

Figur 1     eine schematische Seitenansicht auf ein System mit einer Werkzeugmaschine und Energiespeichereinheit; und

Figur 2     einen Schaltplan des erfindungsgemäßen Gegenstands gemäß einer ersten Ausführungsform.

**Ausführungsbeispiele:**

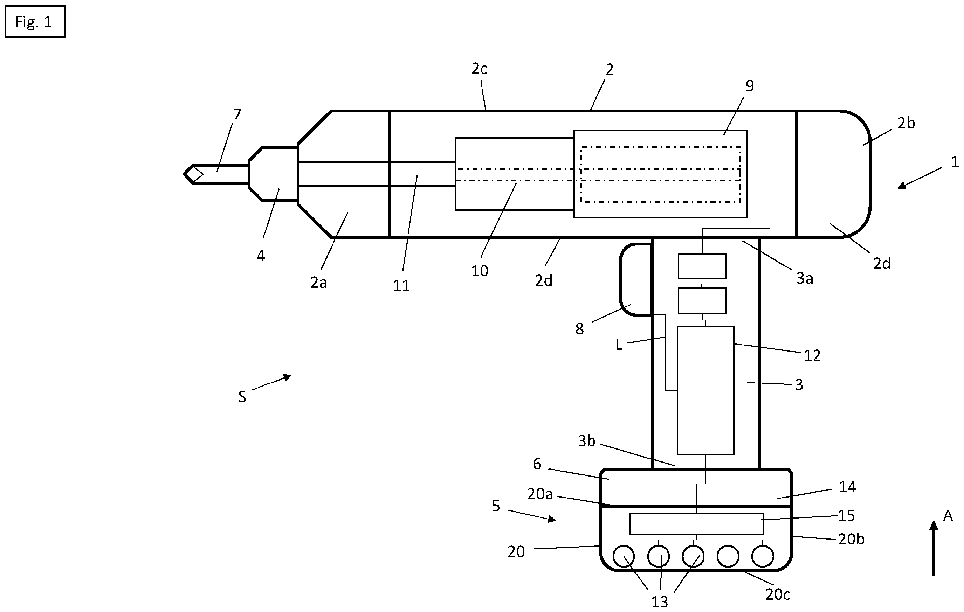

In Figur 1 ist ein System S enthalten eine Werkzeugmaschine 1 und eine Energiespeichereinheit 5 gezeigt.

Die in Figur 1 gargestellte Werkzeugmaschine 1 ist gemäß einer beispielhaften Ausführungsform in Form eines Akku-Schraubers ausgestaltet.

Gemäß einem alternativen Ausführungsbeispiel kann die Werkzeugmaschine 1 auch in Form einer Säge, eines Schleifgeräts, eines Bohrhammers oder dergleichen ausgestaltet sein.

Die als Akku-Schrauber ausgestaltete Werkzeugmaschine 1 enthält dabei im Wesentlichen ein Gehäuse 2, einen Handgriff 3 und eine Werkzeugaufnahme 4.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 4a. In dem beispielhaften Ausführungsbeispiel ist das Werkzeug 7 als Schrauberbit ausgestaltet.

An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 ebenfalls gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Schnittstelle 6 kann die Energiespeichereinheit 5 wiederlösbar befestigt werden.

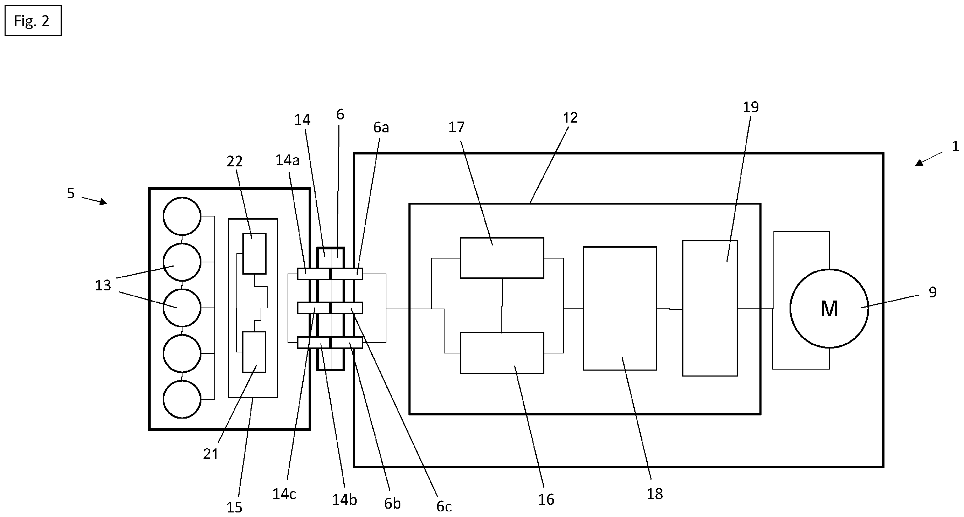

Die Schnittstelle 6 der Werkzeugmaschine 1 enthält dabei einen Pluskontakt 6a, einen Minuskontakt 6b sowie einen Kommunikationskontakt 6c. Der Pluskontakt 6a, der Minuskontakt 6b und der Kommunikationskontakt 6c der Schnittstelle 6 der Werkzeugmaschine 1 sind in Figur 2 dargestellt.

In dem vorliegenden Ausführungsbeispiel ist die Energiespeichereinheit 5 in Form eines einzelnen Akkumulators ausgestaltete. Alternativ kann auch mehr als ein Akkumulator als Energiespeichereinheit 5 der Werkzeugmaschine 1 vorgesehen sein.

Die Energiespeichereinheit 5 dient zum Versorgen der Werkzeugmaschine 1 mit elektrischer Energie.

Im Inneren des Gehäuses 2 ist im Wesentlichen ein Elektromotor 9 als Antrieb, eine Getriebevorrichtung 10 und eine Antriebswelle 11 positioniert. Die Steuereinrichtung 12 befindet sich im Inneren des Handgriffs 3.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug 7 übertragen werden kann.

Der Elektromotor 9 ist in Form eines bürstenlosen Gleichstrommotors ausgestaltet.

Die Steuereinrichtung 12 enthält wiederum einen ersten Transceiver 16, eine Speichereinheit 17, einen Motortreiber 18 und eine Regeleinrichtung 19.

Der erste Transceiver 16 dient zum Senden und Empfangen von Daten sowie Informationen in Form von elektrischen Signalen.

Die Speichereinheit 17 dient zum Speichern von Lookup-Tabellen (auch als Umsetzungstabellen bekannt).

Der erste Transceiver 16 und die Speichereinheit 17 stehen so in Verbindung, dass Daten und Informationen in Form von elektrischen Signalen ausgetauscht werden können.

Ferner ist der erste Transceiver 16 auch mit dem Kommunikationskontakt 6c der Schnittstelle 6 verbunden.

Die Speichereinheit 17 dient zum Speichern und Bereitstellen von Daten und Informationen. Zu den Daten und Informationen gehören unter anderen die Kennwerte und Parameter der Werkzeugmaschine 1. Die Daten und Informationen werden unter anderem in Look-Up-Tabellen gespeichert.

Die Steuereinrichtung 12 ist mittels entsprechenden Leitungen L mit dem Aktivierungsschalter 8, der Schnittstelle 6 und dem Elektromotor 9 verbunden.

In dem vorliegenden Ausführungsbeispiel ist die Regeleinrichtung 19 mit Schaltelementen in Form einer H-Brücke ausgestaltet. Die Schaltelemente sind als Transistoren ausgestaltet. Der Motortreiber dient zum Erzeugen der PWM-Frequenz für die Schaltelemente der Regeleinrichtung 19. Die Schaltelemente sind in den Figuren nicht dargestellt.

Die als Akkumulator ausgestaltete Energiespeichereinheit 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14, einen Speicher 22 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt 14a, einen Minuskontakt 14b und einen Kommunikationskontakt 14c auf.

Die Akku-Schnittstelle 14 ist mit der Schnittstelle 6 der Werkzeugmaschine 1 so verbindbar, dass jeweils die Plus- und Minuskontakte 14a, 14b der Akku-Schnittstelle 14 und die Plus- und Minuskontakte 6a, 6b der Schnittstelle 6 der Werkzeugmaschine 1 miteinander verbindbar sind. Darüber hinaus ist der Kommunikationskontakt 14c des Akkumulators 5 und der Kommunikationskontakt 6c der Werkzeugmaschine 1 miteinander verbindbar.

Der Plus- und Minuskontakt 14a, 14b des Akkumulators 5 und der Plus- und Minuskontakt 6a, 6b der Werkzeugmaschine 1 dient zur Erzeugen eines Stromkreises, wenn der Akkumulator 5 mit einer Werkzeugmaschine 1 oder entsprechend mit einer Ladevorrichtung verbunden ist.

Der Kommunikationskontakt 14c dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie.

Die Energiespeicherzellen 13 sind in zylindrischer Form sowie auf Basis einer Lithium-Ionen-Technologie ausgestaltet.

Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 des Akkumulators 5 enthält unter anderem einen zweiten Transceiver 21, welcher ebenfalls zum Senden und Empfangen von Daten sowie Informationen in Form von elektrischen Signalen dient. Der zweite Transceiver 21 ist mit dem Kommunikationskontakt 14c des Akkumulators 5 verbunden.

Die Steuerungseinrichtung 15 regelt und steuert verschiedene Funktionen des Akkumulators 5. Zu den Funktion gehört unter anderem die Steuerung der Aufnahme und Abgabe von elektrischer Energie in bzw. aus den Energiespeicherzellen 13.

Darüber hinaus wird mit Hilfe der Steuerungseinrichtung 15 die Menge an elektrischer Energie gesteuert, die von den Energiespeicherzellen 13 aufgenommen oder abgegeben werden sollen.

Zur Durchführung des Verfahrens wird zunächst der Akkumulator 5 mit der Werkzeugmaschine 1 verbunden, sodass die jeweiligen Pluskontakte 6a, 14a, Minuskontakte 6b, 14b und Kommunikationskontakte 6c, 14c des Akkumulators 5 und der Werkzeugmaschine 1 miteinander in Kontakt gebracht werden. Durch die Verbindung der Kommunikationskontakte 6c, 14c kann der erste Transceiver 16 der Werkzeugmaschine 1 und der zweite Transceiver 21 des Akkumulators 5 Daten und Informationen austauschen.

Nachdem der Akkumulator 5 und die Werkzeugmaschine 1 miteinander verbunden sind, wird je nach Ausführungsform ein oder mehrere Kennwerte von dem Akkumulator 5 an die Werkzeugmaschine 1 gesendet.

Bei dem vorliegenden Ausführungsbeispiel wird ein Wert der elektromagnetischen Induktion (bzw. Induktivität) des Akkumulators 5 als Kennwert mittels der jeweiligen Transceiver 16, 21 und Kommunikationskontakte 6c, 14c an die Steuereinrichtung 12 der Werkzeugmaschine 1 gesendet.

Die Steuereinrichtung 12 der Werkzeugmaschine 1 ermittelt einen Resonanzfrequenzwert auf Grundlage der übermittelten Kennwerte.

Im vorliegenden Ausführungsbeispiel wird ein Resonanzfrequenzwert auf Basis der Induktivität L vom Akkumulator 5 und Werkzeugmaschine 1 sowie der Kapazität C der Werkzeugmaschine 1 mittels der Lookup-Tabellen sowie der Formel A, welche in der Speichereinheit 17 hinterlegt sind, ermittelt. Die Kapazität der Werkzeugmaschine 1 ergibt sich dabei wenigstens aus einem Zwischenkreiskondensator (= DC-link capacitor) als Bestandteil des Motortreibers 18.

$$f = \frac{1}{2\pi\sqrt{LC}} \text{ (Formel A)}$$

Als nächstes wird eine Schaltfrequenz (= PWM-Frequenz) für den Motortreiber 18 zur Regelung des Elektromotors 9 auf einen Wert eingestellt, der größer oder kleiner als der ermittelte Resonanzfrequenzwert ist.

**Bezugszeichen**

| | |
|---|---|
| 1 | Werkzeugmaschine |
| 2 | Gehäuse |
| 3 | Handgriff |
| 3a | erstes Ende des Handgriffs |
| 3b | zweites Ende des Handgriffs |
| 4 | Werkzeugaufnahme |
| 5 | Energiespeichereinheit |
| 6 | Schnittstelle der Werkzeugmaschine |
| 7 | Werkzeug |
| 8 | Aktivierungsschalter |
| 9 | Elektromotor |
| 10 | Getriebevorrichtung |
| 11 | Antriebswelle |
| 12 | Steuereinrichtung der Werkzeugmaschine |
| 13 | Energiespeicherzelle |
| 14 | Akku-Schnittstelle |
| 14a | Pluskontakt der Akku-Schnittstelle |
| 14b | Minuskontakt der Akku-Schnittstelle |
| 14c | Kommunikationskontakt der Akku-Schnittstelle |
| 15 | Steuerungseinrichtung der Energiespeichereinheit |

| 16 | erster Transceiver der Werkzeugmaschine |
| 17 | Speichereinheit der Werkzeugmaschine |
| 18 | Motortreiber |
| 19 | Regeleinrichtung |
| 20 | Akku-Gehäuse |
| 20a | Deckelelement des Akku-Gehäuses |
| 20b | Seitenwand des Akku-Gehäuses |
| 20c | Bodenelement des Akku-Gehäuses |
| 21 | zweiter Transceiver der Energiespeichereinheit |

S    System
L    Leitung

**Patentansprüche**

**1.** Verfahren zum Steuern und Regeln eines Systems (S) enthaltend eine Werkzeugmaschine (1) und wenigstens eine mit der Werkzeugmaschine (1) verbindbaren Energiespeichereinheit (5), wobei die Werkzeugmaschine (1) einen Elektromotor (9), eine Steuervorrichtung (12), einen Motortreiber (18), eine Regeleinrichtung (19) und einen ersten Transceiver (16) enthält, und wobei die wenigstens eine Energiespeichereinheit (5) einen zweiten Transceiver (21) enthält,
**gekennzeichnet durch** die Verfahrensschritte:

   - Verbinden der wenigstens einen Energiespeichereinheit (5) mit der Werkzeugmaschine (1);
   - Übermitteln wenigstens eines Kennwertes der wenigstens einen Energiespeichereinheit (5) von der wenigsten einen Energiespeichereinheit (5) an die Werkzeugmaschine (1);
   - Ermitteln eines Resonanzfrequenzwertes basierend auf dem wenigstens einen übermittelten Kennwert der wenigstens einen Energiespeichereinheit (5) sowie auf wenigstens einem Kennwert der Werkzeugmaschine (1); und
   - Einstellen einer Schaltfrequenz für den Motortreiber (18) zur Regelung des Elektromotors (9) auf einen Wert, der größer oder kleiner als der ermittelte Resonanzfrequenzwert ist.

**2.** Verfahren nach Anspruch 1,
**dadurch gekennzeichnet, dass** der wenigstens eine Kennwerte der wenigstens einen Energiespeichereinheit (5) ein Induktionswert, Kapazitätswert und/oder Widerstandswert ist.

**3.** Verfahren nach Anspruch 1 oder 2,
**dadurch gekennzeichnet, dass** der Kennwert der Werkzeugmaschine (1) ein Induktionswert, Kapazitätswert und/oder Widerstandswert ist.

**4.** System (S) enthaltend eine Werkzeugmaschine (1) und wenigstens eine mit der Werkzeugmaschine (1) verbindbare Energiespeichereinheit (5) zur Durchführung eines Verfahrens nach wenigstens einem der Ansprüche 1 bis 3.

Fig. 1

Fig. 2

EUROPÄISCHER RECHERCHENBERICHT

Nummer der Anmeldung

EP 24 17 6153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 4 122 648 A1 (HILTI AG [LI]) 25. Januar 2023 (2023-01-25) * Zusammenfassung * * Absatz [0016] - Absatz [0053] * ----- | 1-4 | INV. H02P27/08 B25F5/00 |
| Y | DE 10 2012 215152 A1 (SIEMENS AG [DE]) 20. März 2014 (2014-03-20) * Zusammenfassung * * Absatz [0001] - Absatz [0027] * ----- | 1-4 | |

**RECHERCHIERTE SACHGEBIETE (IPC)**

H02P
B25H
B25F

Der vorliegende Recherchenbericht wurde für alle Patentansprüche erstellt

| Recherchenort | Abschlußdatum der Recherche | Prüfer |
|---|---|---|
| München | 30. Oktober 2024 | Zeng, Wenyan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 17 6153

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2024

| Im Recherchenbericht angeführtes Patentdokument | Datum der Veröffentlichung | Mitglied(er) der Patentfamilie | Datum der Veröffentlichung |
|---|---|---|---|
| EP 4122648 A1 | 25-01-2023 | CN 117396310 A | 12-01-2024 |
| | | EP 4122648 A1 | 25-01-2023 |
| | | EP 4373639 A1 | 29-05-2024 |
| | | US 2024339680 A1 | 10-10-2024 |
| | | WO 2023001562 A1 | 26-01-2023 |
| DE 102012215152 A1 | 20-03-2014 | CN 104755310 A | 01-07-2015 |
| | | DE 102012215152 A1 | 20-03-2014 |
| | | EP 2872353 A2 | 20-05-2015 |
| | | JP 6092392 B2 | 08-03-2017 |
| | | JP 2015531226 A | 29-10-2015 |
| | | KR 20150052130 A | 13-05-2015 |
| | | US 2015224880 A1 | 13-08-2015 |
| | | WO 2014033026 A2 | 06-03-2014 |

EPO FORM P0461

Für nähere Einzelheiten zu diesem Anhang : siehe Amtsblatt des Europäischen Patentamts, Nr.12/82